# EUROPÄISCHE PATENTSCHRIFT

(11) **EP 0 590 169 B1**
(45) Veröffentlichungstag und Bekanntmachung des Hinweises auf die Patenterteilung: **27.11.1996**
(21) Anmeldenummer: 92116372.1
(22) Anmeldetag: 24.09.1992
(51) Int. Cl.: H02K 11/00, G01M 1/22

(54) **Verfahren zur Bestimmung der einem angetriebenen rotierenden starren Rotor anhaftenden Unwucht**
Procedure for imbalance determination of a rotary driven inflexible shaft
Procédé pour la détermination du balourd d'un rotor inflexible entraîné en rotation

(43) Veröffentlichungstag der Anmeldung: 06.04.1994
(73) Patentinhaber: SCHENCK RoTec GmbH, D-64293 Darmstadt (DE)
(72) Erfinder: Gasch, Robert, Prof. Dr., 1000 Berlin 41 (DE); Ruhmich, Michael, 1000 Berlin 21 (DE)
(74) Vertreter: Brandt, Ernst-Ulrich, Dipl.-Phys., Dipl.-Ing.

(56) Entgegenhaltungen:
- US-A- 4 868 762

## Beschreibung

Die Erfindung betrifft ein Verfahren zur Bestimmung der einem angetriebenen rotierenden starren Rotor anhaftenden Unwucht nach dem Oberbegriff des Patentanspruches 1.

Ein auszuwuchtender Rotor wird so lange als starrer Rotor betrachtet, solange dieser noch unterhalb seiner ersten kritischen Drehzahl angetrieben wird und wobei die Wirkungen der Unwucht mit Hilfe von Schwingungsumformern an den Lagerständern einer Auswuchtmaschine, in der der zu untersuchende starre Rotor eingelagert ist, bestimmt wird.

Hierbei unterscheidet man nunmehr zwei Möglichkeiten des Auswuchtens. Zum einen das unterkritische Auswuchten, hierbei ist die Eigenfrequenz des Systems "Rotor in seinen Wuchtlagern" größer als die Drehzahl, mit der der zu untersuchende starre Rotor angetrieben wird. Zum anderen gibt es die Gattung der überkritischen oder weichen Auswuchtmaschine, in diesem Falle ist die kritische Drehzahl des Systems "Rotor in seinen Wuchtlagern" kleiner als die Drehzahl, mit welcher der starre Rotor angetrieben wird.

Unabhängig von einer unter- oder überkritischen Lagerung des zu untersuchenden starren Rotors wird bisher die Messung der Wirkung der Unwucht bei konstanter Drehzahl des zu untersuchenden starren Rotors durchgeführt, wobei, um eine möglichst genaue Messung der Winkellage und der Größe der Unwuchtwirkung in den beiden Lagerständern zu erhalten, mehrere Meßumdrehungen durchgeführt werden müssen. Zufolge der erforderlichen Hochlaufzeit, der Meßzeit und der Bremszeit ergibt sich für die Dauer eines Meßlaufs eine Untergrenze für die Wuchtzeit, die aus physikalischen Gründen nicht unterschritten werden kann. Ein derartiges Meßverfahren ist aus der US-A-4868762 bekannt. Der starre Rotor wird an gegenüberliegenden Enden abgestützt und von einem Motor in Rotation versetzt. Die Messung der Unwucht erfolgt nach der Hochlaufphase bei konstanter Drehzahl des Rotors in aufeinanderfolgenden Meßzyklen, die jeweils mehrere Rotorumdrehungen umfassen. Anschließend wird der Rotor in einer Verzögerungsphase bis zum Stillstand abgebremst.

Auch ist es bekanntgeworden, mit Hilfe sogenannter Auslaufmaschinen den zu untersuchenden starren Rotor in einer Auswuchtmaschine zu lagern, diesen mit Hilfe des Antriebsmotors auf eine über der Meßdrehzahl liegende Drehzahl des zu untersuchenden starren Rotors zu beschleunigen, anschließend den starren Rotor vom Motor abzukuppeln und im Auslauf die Unwuchtschwingungen in den Lagerständern nach Winkellage und Größe zu bestimmen. Derartige Methoden sind noch zeitaufwendiger, wenn nicht nach Durchschreiten der Meßdrehzahl der zu untersuchende starre Rotor zusätzlich abgebremst wird.

Durch den Fortschritt-Bericht-VDI, Reihe 11, Nr. 143, Düsseldorf, VDI-Verlag 1991 "Auswuchten elastischer Rotoren nach nur einem transienten Meßlauf " von M. S. Rama de Silva, ist es bekanntgeworden, elastische Rotoren nach nur einem transienten Meßlauf auszuwuchten dergestalt, daß während des Durchlaufs des elastischen Rotors durch seine verschiedenen kritischen Drehzahlen durch Abtastung der Wellenform des Rotors an verschiedenen Stellen des Rotors hieraus Meßwerte gewonnen wurden, aufgrund derer ein anschließendes Auswuchten des Rotors möglich war, so daß der Rotor anschließend beim erneuten Durchfahren der kritischen Drehzahlen keine Auslenkungen mehr zeigte. Um diesen Rotor auch im unterkritischen Bereich auszuwuchten, d. h. die Wirkungen der Unwucht auf die Lager zu beseitigen, ist es erforderlich, mit einem derartigen Rotor noch einen weiteren Meßlauf im unterkritischen Bereich durchzuführen. Eine derartige Vorgehensweise ist jedoch sehr zeitaufwendig, da der Rotor in diesem Drehzahlbereich als starrer Körper anzusehen ist, dessen Lagerkräfte noch nicht beseitigt sind. Er müßte hierzu erneut auf eine Meßdrehzahl unterhalb der ersten kritischen Drehzahl hochgefahren werden, es müßten bei dieser Meßdrehzahl mehrere Messungen durchgeführt werden und anschließend wäre der Körper wieder abzubremsen.

Darüber hinaus ist festzustellen, daß die Meßdrehzahlen starrer Rotoren einer bestimmten Schwankung unterliegen, so daß trotz einer größeren Anzahl von Messungen während einem Meßlauf die Qualität der Unwuchtmessung zusätzlich beeinflußt wird.

Ausgehend von diesem Stand der Technik liegt der vorliegenden Erfindung die Aufgabe zugrunde, ohne Rücksicht auf die augenblickliche Drehzahl eines starren Rotors dessen Unwuchtwirkung in kürzester Zeit zu bestimmen. Diese Aufgabe wird mit den kennzeichnenden Merkmalen des Anspruchs 1 gelöst. Durch die erfinderische Messung der Lage und Größe der von einer Unwucht hervorgerufenen Schwingung im unterkritischen Bereich bei mindestens einem Teil einer Umdrehung des starren Rotors, wobei mindestens zweimal an mindestens einer Lagerung des starren Rotors die Wirkungen der Unwuchtschwingung bestimmt werden und wobei gleichzeitig die Zeitintervalle zwischen den einzelnen Bestimmungen während des mindestens einen Teils der Umdrehung berücksichtigt werden und wobei die Änderung der Kraftwirkung durch die Beschleunigung während des mindestens einen Teils -der Umdrehung berücksichtigt wird, wird es erstmals ermöglicht, eine transiente Unwuchtmessung bei einem starren Rotor durchzuführen. Hierdurch wird der bisherige Zeitaufwand in erheblichem Maße reduziert, und zwar bei gleicher Meßgüte, wie von den bisherigen mehreren Messungen mit größerem Zeitaufwand bekannt. Dabei wird gleichzeitig der Fehler, der durch die Drehzahlschwankungen einer konstanten Meßdrehzahl hervorgerufen wurde, eliminiert. Die Erfindung gemäß Anspruch 1 läßt sich somit auch erfindungsgemäß anwenden, bei der bisherigen Wuchtung starrer Rotoren um die Fehler der Meßdrehzahlschwankungen zu eliminieren.

In Ausgestaltung der Erfindung wird gemäß Anspruch 2 vorgeschlagen, daß der starre Rotor, vorzugsweise von einem vorgebbaren Drehzahlprogramm gesteuert, in Gang gesetzt und anschließend nach Erreichen einer Maximaldrehzahl wieder zum Stillstand gebracht wird. Damit wird erstmals bei entsprechender Ausgestaltung des Antriebsmotors es ermöglicht, bei einer einzigen Umdrehung des zu untersuchenden starren Rotors dessen Vermessung auf die an den Lagerstellen auftretenden Unwuchtwirkungen hin zu bestimmen.

In noch weiterer Ausgestaltung des Verfahrens wird vorgeschlagen, daß das Drehzahlprogramm einen sinusquadrat-proportionalen Drehzahlverlauf vorgibt. Hierdurch läßt sich für die mindestens zwei Bestimmungen in kürzester Zeit eine beachtliche Drehzahldifferenz erreichen.

In noch weiterer Ausgestaltung der Erfindung wird vorgeschlagen, daß die Bestimmung der Lage und Größe der von der Unwucht hervorgerufenen Schwingungen während Hochlaufphase und/oder Auslaufphase des starren Rotors durchgeführt wird. Diese Ausgestaltung zeichnet sich dadurch aus, daß quasi auch Kontrollmessungen während des Auslaufs durchgeführt werden können und bis zum Stillstand mit den Werten des Hochlaufs verglichen werden können, so daß eine noch weitere Steigerung in der Auswuchtgüte erreichbar ist.

In noch weiterer Ausgestaltung des Erfindungsgegenstandes wird vorgeschlagen, daß die Bestimmung der Lage und Größe der von der Unwucht hervorgerufenen Schwingungen im Bereich der maximalen Umdrehungen des starren Rotors durchgeführt werden. Hierdurch wird es ermöglicht, nach der Messung den Rotor auf schnellstem Wege zum Stillstand zu bringen.

Eine noch weitere Ausgestaltung des Verfahrens zeichnet sich dadurch aus, daß nach Bestimmung der Unwucht nach Lage und Größe der starre Rotor derart abgebremst wird, daß sein Stillstand in einer vorbestimmten Lage insbesondere gegenüber einem die Unwucht beseitigenden Werkzeug stattfindet. Mit dieser Ausgestaltung wird die Auswuchtzeit insgesamt verkürzt, wenn die Auswuchtzeit als die Zeit definiert wird, die zum Bestimmen und zum Ausgleich der Unwucht definiert wird.

Die Erfindung wird anhand des nachfolgend zu beschreibenden Ausführungsbeispiels näher erläutert.

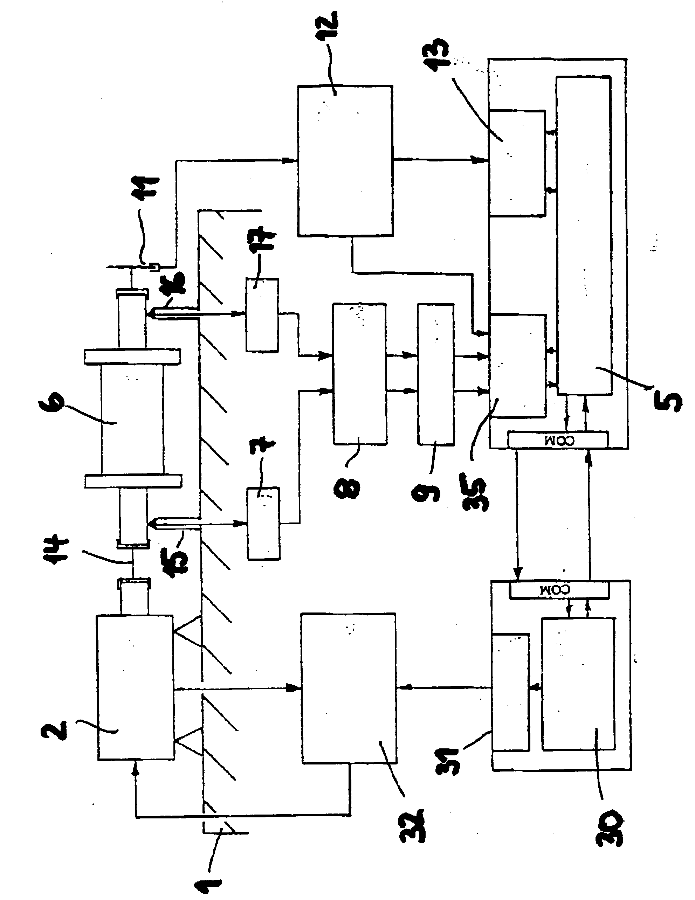

Die Figur zeigt in schematischer Darstellung eine Auswuchtmaschine mit eingelagertem starren Rotor und gleichzeitig in schematischer Darstellung die elektronische Auswertung der gewonnenen Werte im Meßlauf gemäß der Erfindung.

Auf einem Lagerbett 1 ist ein Antriebsmotor 2 gelagert, der über eine Kupplung 14 mit dem zu untersuchenden starren Rotor 6 verbunden ist. Der zu untersuchende starre Rotor 6 stützt sich auf starren Lagern 15, 16 ab, die mit Schwingungsumformern 7, 17 bestückt sind. Die durch die Unwucht des zu untersuchenden starren Rotors 6 hervorgerufenen Schwingungen werden von Schwingungsumformern 7, 17 vorzugsweise in nur einer Richtung (horizontal oder vertikal) als Auslenkungssignal oder Kraftwirkungssignal aufgenommen und einer Auswerteeinheit zugeführt.

Bei den Schwingungsumformern 7, 17 kann es sich um kraftmessende, geschwindigkeitsmessende oder beschleunigungsmessende Umformer handeln.

Weiterhin ist an dem zu untersuchenden starren Rotor 6 oder am freien Ende des Antriebsstrangs ein Winkellagengeber 11 angeordnet, der beispielsweise als Kodierscheibe ausgebildet ist und pro Umdrehung des zu untersuchenden starren Rotors 6 eine bestimmte Anzahl von Winkelimpulsen ebenfalls der Auswerteeinheit 5 zuführt.

Über ein mit der Auswerteeinheit 5 verbundenes Steuerungsprogramm 30 wird über einen Digitalanalogwandler 31 eine vorgegebene Drehzahlsteuerung 32 dem Antriebsmotor 2 beispielsweise eine sinusquadratförmige Drehzahländerung vorgegeben. Über die Kupplung 14 oder direkt mit dem Antrieb gekuppelt beginnt der zu untersuchende starre Rotor 6 sich entsprechend dem Steuerprogramm 3 zu bewegen und es werden über den Winkellagengeber 11 die einzelnen Impulslängen, die von dem Drehzustand abhängig sind, über eine Zeitabstandsschaltung 13 in Verbindung mit einer Winkelteilerschaltung 12 gemesen und der Auswerteeinheit 5 zugeführt, gleichzeitig werden gesteuert über diese Winkelteilerschaltung 12 die auf die Lager 15, 16 einwirkenden Kräfte von den Schwingungsumformern 7, 17 aufgenommen und über einen Verstärker 8, einen Tiefpaß 9 und einen Analogdigitalwandler 35 ebenfalls der Auswerteeinheit 5 zugeführt. In der Auswerteeinheit wird auch noch die Änderung der Kraftwirkung durch die Beschleunigung berücksichtigt.

## Patentansprüche

1. Verfahren zur Bestimmung der einem angetriebenen rotierenden starren Rotor (6) anhaftenden Unwucht bezogen auf mindestens eine Ausgleichsebene des starren Rotors (6) nach Winkellage und Größe, wobei Lage und Größe der von der Unwucht hervorgerufenen Schwingungen im unterkritischen Bereich bei mindestens einem Teil einer Umdrehung des starren Rotors (6) mindestens zweimal an mindestens einer Lagerung des starren Rotors (6) bestimmt wird, dadurch gekennzeichnet, daß eine transiente Unwuchtmessung vorgesehen ist, bei der von einem Winkellagengeber (11) gelieferte Impulse einer Auswerteeinheit (5) zugeführt werden und die Intervalle zwischen den einzelnen Bestimmungen während des mindestens einen Teils der Umdrehung berücksichtigt werden und einzelne Impulslängen, die von dem Drehzustand abhängig sind, ermittelt werden, daß die von den Schwingungsumformern (7,17) aufgenommenen Kräfte ebenfalls der Auswerteeinheit (5) zugeführt werden und daß in der Auswerteeinheit (5) die Intervalle sowie die Impuls längen und die Änderung der Kraftwirkung durch die Beschleunigung während des mindestens einen Teils der Umdrehung berücksichtigt werden.

2. Verfahren nach Anspruch 1, dadurch gekennzeichnet, daß der starre Rotor (6), vorzugweise von einem vorgebbaren Drehzahlprogramm gesteuert, in Gang gesetzt und anschließend nach Erreichen einer maximalen Drehzahl wieder zum Stillstand gebracht wird.

3. Verfahren nach Anspruch 2, dadurch gekennzeichnet, daß das Drehzahlprogramm einen sinusquadrat-proportionalen Drehzahlverlauf vorgibt.

4. Verfahren nach einem oder mehreren der vorhergehenden Ansprüche, dadurch gekennzeichnet, daß die Bestimmung der Lage und Größe der von der Unwucht hervorgerufenen Schwingungen während der Hochlaufphase und/oder Auslaufphase des starren Rotors (6) durchgeführt wird.

5. Verfahren nach einem oder mehreren der vorhergehenden Ansprüche, dadurch gekennzeichnet, daß die Bestimmung der Lage und Größe der von der Unwucht hervorgerufenen Schwingungen im Bereich der maximalen Umdrehungen des starren Rotors (6) durchgeführt werden.

6. Verfahren nach einem oder mehreren der vorhergehenden Ansprüche, dadurch gekennzeichnet, daß nach Bestimmung der Unwucht nach Lage und Größe der starre Rotor (6) derart abgebremst wird, daß sein Stillstand in einer vorbestimmten Lage, insbesondere gegenüber einem die Unwucht beseitigenden Werkzeug, stattfindet.

7. Verfahren nach einem oder mehreren der vorhergehenden Ansprüche, dadurch gekennzeichnet, daß Lage und Größe der von der Unwucht hervorgerufenen Schwingungen durch Messung von Auslenkungen oder Kraftwirkungen bestimmt wird.

## Claims

1. A method of determining the unbalance in a driven, rotating, rigid rotor (6) relative to at least one balancing plane of the rigid rotor (6) in respect of angular position and magnitude, the position and magnitude of the oscillations produced by the unbalance in the sub-critical range being determined at least twice at at least one bearing of the rigid rotor (6) during at leasr part of a revolution of the rigid rotor (6), characterised in that a transient measurement of unbalance is provided, wherein pulses supplied by an angular position transmitter (11) are fed to an evaluation unit (5) and the intervals between the individual determinations during the at least part-revolution are taken into account and individual pulse lengths dependent on the rotation state are determined, that the forces picked up by the oscillation converters (7,17) are also fed to the evaluation unit (5), and that the intervals and the pulse lengths and the change in dynamic effect caused by the acceleration during the at least part-revolution are taken into account in the evaluation unit (5).

2. The method of claim 1, characterised in that the rigid rotor (6), preferably controlled by a specifiable speed program, is set in motion and then stopped again after reaching a maximum speed.

3. The method of claim 2, characterised in that the speed program specifies a speed characteristic proportional to the sine squared.

4. The method of any of the preceding claims. characterised in that determination of the position and magnitude of the oscillations produced by the unbalance is carried out during the acceleration phase and/or deceleration phase of the rigid rotor (6).

5. The method of any of the preceding claims, characterised in that determination of the position and magnitude of the oscillations produced by the unbalance is carried out within the range of maximal revolutions of the rigid rotor (6).

6. The method of any of the preceding claims, characterised in that when the unbalance has been determined in respect of position and magnitude the rigid rotor (6) is decelerated in such a way that its stoppage takes place in a predetermined position, particularly opposite a tool for eliminating the unbalance.

7. The method of any of the preceding claims, characterised in that the position and magnitude of the oscillations produced by the unbalance are determined by measuring deflections or dynamic effects.

## Revendications

1. Procédé de détermination du balourd d'un rotor (6) rigide entraîné en rotation, par rapport à au moins un plan d'équilibrage du rotor (6) rigide, suivant la position angulaire et la grandeur, la position et la grandeur des oscillations provoquées par le balourd étant déterminées dans le domaine sous-critique pour au moins une partie d'une rotation du rotor (6) rigide, au moins deux fois sur au moins un appui du rotor (6) rigide, caractérisé en ce qu'il est prévu une mesure transitoire du balourd, pour laquelle des impulsions fournies par un capteur de position angulaire 11 sont envoyées à une unité d'exploitation (5) et les intervalles entre les différentes déterminations sont pris en compte pendant au moins une partie de la rotation et des longueurs d'impulsion individuelles, qui dépendent de l'état de rotation, sont déterminées, en ce que les forces absorbées par les convertisseurs d'oscillations (7, 17) sont également envoyées à l'unité d'exploitation 5 et en ce que dans l'unité d'exploitation (5) les intervalles ainsi que les longueurs d'impulsion et la variation de l'action des forces par l'accélération, sont pris en compte pendant au moins une partie de la rotation.

2. Procédé selon la revendication 1, caractérisé en ce que le rotor (6) rigide, de préférence commandé par un programme de vitesse de rotation à donner, est mis en marche et ensuite, est mis à nouveau à l'arrêt, après qu'une vitesse de rotation maximale a été atteinte.

3. Procédé selon la revendication 2, caractérisé en ce que le programme de vitesse de rotation donne une courbe de vitesse de rotation proportionnelle au carré du sinus.

4. Procédé selon une ou plusieurs des revendications précédentes, caractérisé en ce que la détermination de la position et de la grandeur des oscillations, provoquées par le balourd, s'effectue pendant la phase d'accélération et/ou la phase de rotation sur la lancée du rotor (6) rigide.

5. Procédé selon une ou plusieurs des revendications précédentes, caractérisé en ce que la détermination de la position et de la grandeur des oscillations provoquées par le balourd s'effectue dans le domaine des rotations maximales du rotor (6) rigide.

6. Procédé selon une ou plusieurs des revendications précédentes, caractérisé en ce qu'après détermination du balourd suivant la position et la grandeur, le rotor (6) rigide est freiné de manière que son arrêt se produise dans une position prédéterminée, en particulier face à un outil éliminant le balourd.

7. Procédé selon une ou plusieurs des revendications précédentes, caractérisé en ce que la position et la grandeur des oscillations provoquées par le balourd sont déterminées par la mesure de déviations ou d'effets de forces.
